# EUROPÄISCHE PATENTSCHRIFT

(11) **EP 2 400 581 B1**
(45) Veröffentlichungstag und Bekanntmachung des Hinweises auf die Patenterteilung: **06.05.2015**
(21) Anmeldenummer: 11169872.6
(22) Anmeldetag: 14.06.2011
(51) Int. Cl.: H01M 2/20, H01M 10/04

(54) **Montageeinrichtung für Batteriezellen**
Fitting device for battery cells
Dispositif de montage pour cellules de batterie

(30) Priorität: 22.06.2010 DE 102010030369
(43) Veröffentlichungstag der Anmeldung: 28.12.2011
(73) Patentinhaber: LionTec GmbH, 63654 Büdingen (DE)
(72) Erfinder: Riffel, Andreas, 63654 Büdingen (DE)
(74) Vertreter: WSL Patentanwälte Partnerschaft mbB

(56) Entgegenhaltungen:
- EP-A2- 1 054 461
- EP-A2- 1 505 670
- US-A1- 2008 124 617
- US-A1- 2010 143 795

## Beschreibung

Die vorliegende Erfindung betrifft eine Montageeinrichtung zum elektrischen Anschließen von Batteriezellen. Ebenso betrifft die Erfindung Batterien und Batteriemodule, welche eine solche Montageeinrichtung aufweisen

Aus dem Stand der Technik ist es bekannt, eine Vielzahl von einzelnen Batteriezellen zu einem Verbund, dem sogenannten Batteriemodul, zusammenzuschließen. Ein wesentlicher Gesichtspunkt ist dabei das Bereitstellen einer möglichst hohen elektrischen Kapazität in einem vorgegebenen Volumen (Hohe Energiedichte). Da derartige Batteriemodule häufig zur Verwendung in mobilen Einrichtungen, beispielsweise Fahrzeugen, vorgesehen sind, besteht das Bestreben Batteriezellen so herzustellen, dass sich mit den einzelnen Batteriezellen eine möglichst hohe Packungsdichte erzielen lässt. Aus mehreren Zellen aufgebaute Batterien oder Batteriemodule sind daher zumeist aus einer Vielzahl von prismatischen Batteriezellen aufgebaut, die sich möglichst raumfüllend nebeneinander anordnen lassen.

Um eine vorgegebene Gesamtspannung und eine ebenfalls vorgegebene Kapazität des Batteriemoduls bzw. der Batterie bereitzustellen, werden die einzelnen Batteriezellen entsprechend untereinander in Reihen- und/oder Parallelschaltung elektrisch miteinander verbunden. Zur Vermeidung von Verlusten und Verringerung der Wärmeentwicklung im Betrieb sollten die elektrischen Verbindungen zwischen den einzelnen Batteriezellen einen möglichst niedrigen Widerstand und somit einen möglichst großen Verbindungsquerschnitt aufweisen.

Bei herkömmlichen Batteriemodulen sind die einzelnen Batteriezellen elektrisch mit Hilfe von Schweißstellen, Klebe- oder Lötverbindungen permanent miteinander verbunden. Derartige Schweiß-, Klebe- bzw. Lötstellen in herkömmlichen Systemen sind allerdings oft einer großen mechanischen Beanspruchung ausgesetzt, die dazu führt, dass die elektrischen Verbindungen zwischen den einzelnen Batteriezellen getrennt oder zumindest soweit beschädigt werden, dass sich der Übergangswiderstand spürbar erhöht, wodurch das Batteriemodul somit unbrauchbar werden kann oder zumindest an Leistung verliert.

Aus der EP 1 505 670 A2 ist eine Batterieblockanordnung sowie ein Verfahren zu deren Herstellung bekannt. Bei einer solchen Anordnung sind die Anschlussfahnen mehrerer Batteriezellen über eine Sammelschiene miteinander verbunden.

Die EP 1 054 461 A2 zeigt eine Batterieverbindungsplatte und ein Verfahren zu deren Herstellung. In die Verbindungsplatte sind eine Stromführungsschiene und ein Anschluss für eine-Elektrode einer Batterie eingegossen.

US 2012/0143795 A1 betrifft eine Batterie und ein Herstellungsverfahren für eine solche Batterie. Die Batterie weist eine Mehrzahl von Batteriezelle, auf, deren Anschlussfahnen mit einem Deckel des Batteriegehäuses elektrisch verbunden sind.

Aus der US 2008/0124617 A1 ist eine Batterie mit einer Vielzahl von Batteriezellen bekannt, deren Anschlussfahnen elektrisch mittels Anschlüssplatten verbunden sind.

Nachteilig ist auch, dass die Schweiß-, Klebe- bzw. Lötstellen sich im Betrieb oder alterungsbedingt teilweise lösen, wodurch der Widerstand der elektrischen Verbindung erhöht wird und das Batteriemodul durch den damit verbundenen Temperaturanstieg beschädigt werden kann.

Aufgrund der dauerhaften Verbindung großer und kompakter Gruppen von Batteriezellen können beschädigte Batteriezellen gar nicht oder nur mit einem großen Aufwand repariert bzw. ersetzt werden.

Gegenüber dem beschriebenen Stand der Technik ist es daher Aufgabe der vorliegenden Erfindung, eine Vorrichtung zum elektrischen Anschließen und Verbinden von Batteriezellen sowie entsprechende Batterien oder Batteriemodule bereitzustellen, deren elektrische Verbindungsstellen mechanisch stabil sind und im Gebrauch ebenso wie bei der Herstellung nur eine geringe mechanische Belastung erfahren, wobei einzelne Batteriezellen vorzugsweise leicht austauschbar sind und sowohl die Anzahl der einzelnen Batteriezellen als auch deren elektrische Beschaltung zwischen Reihen- und Parallelschaltung problemlos variiert werden kann.

Die vorliegende Aufgabe wird erfindungsgemäß durch eine Montageeinrichtung mit den eingangs genannten Merkmalen gelöst, die eine Montageplatte mit einer Ober- und einer Unterseite aufweist, wobei die Montageplatte aus einem elektrisch nicht leitfähigen Material hergestellt ist, wobei die Montageplatte so bemessen ist, dass sie die Anschlussbereiche mindestens zweier benachbarter Zellen abdeckt, wobei in der Montageplatte mindestens zwei Durchführungen vorgesehen sind, welche derart ausgestaltet und angeordnet sind, dass zumindest eine Anschlussfahne einer Batteriezelle durch eine Durchführung hindurchgeführt werden kann, so dass die hindurchgeführten Anschlussfahnen zumindest zweier benachbarter Batteriezellen auf der Oberseite der Montageplatte mechanisch und elektrisch verbindbar sind wobei die Montageplatte (2) auf der Oberseite (3) eine Vertiefung (6) aufweist, die zur Aufnahme von mindestens zwei Klemmplatten und zwei Anschlussfahnen vorgesehen ist.

Die Montageplatte, welche Ansctilussbereiche mit Anschlussfahnen von mindestens zwei benachbarten Batteriezellen überdeckt, sorgt aufgrund der Durchführungen für eine genau definierte Positionierung der Batteriezellen und auch der Anschlussfahnen. Zusätzlich gibt sie dem Verbund aus mindestens zwei Zellen auch einen guten mechanischen Halt. Da die Anschlussfahnen auf der von den Batteriezellen abgewandten Seite der Montageplatte miteinander verbunden werden, bieten die Durchführungen und die Montageplatte auch eine Zugentlastung, wenn die Batteriezellen bewegt werden bzw. mechanischen Belastungen ausgesetzt sind.

In einer bevorzugten Ausführungsform hat die Montageplatte auf der Oberseite eine Vertiefung, zur zumindest abschnittsweisen Aufnahme einer Klemmplatte, welche vorzugsweise aus einem elektrisch leitfähigen Material hergestellt ist oder eine elektrisch leitfähige Schicht aufweist, die den aufeinander liegenden Anschlussfahnen zugewandt ist, wobei an der Montageplatte eine Befestigungsvorrichtung zum Befestigen der Klemmplatte und der Anschlussfahnen vorgesehen ist.

Die Batteriezellen eines Batteriemoduls werden unterhalb einer Montageplatte angeordnet. Eine Batteriezelle weist zwei Anschlusskontakte auf, die zweckmäßigerweise als sogenannte Anschlussfahnen ausgestaltet sind. In Abhängigkeit von der Position der einzelnen Anschlussfahnen weist die Montageplatte an korrespondierenden Positionen Durchführungen auf, durch die die Anschlussfahnen von der Unterseite der Montageplatte zur Oberseite der Montageplatte geführt werden können. Auf der Oberseite der Montageplatte können so Anschlussfahnen zumindest zweier benachbarter Batteriezellen in elektrischen Kontakt miteinander gebracht werden.

Damit die elektrische Verbindung vor einer mechanischen Einwirkung geschützt ist, ist gemäß einer Variante vorgesehen, dass die Montageplatte eine Vertiefung aufweist, welche an die oberen Austrittsöffnungen der Durchführungen anschließt und zur zumindest abschnittsweisen Aufnahme einer Klemmplatte ausgestaltet ist. Die Anschlussfahnen benachbarter Batteriezellen werden aufeinander zu und in die Aussparung hinein umgebogen und übereinander gelegt. Falls gewünscht, könnten die Anschlussfahnen in dieser Position miteinander verlötet oder verschweißt werden. Ist die Klemmplatte aus einem elektrisch leitfähigen Material hergestellt, ist es nicht zwingend notwendig, dass sich die Anschlussfahnen überlappen, jedoch erhöht ein Überlappen der Anschlussfahnen die elektrische Leitfähigkeit der Verbindung der Anschlussfahnen.

In einer Ausführungsform wird eine Klemmplatte auf die übereinanderliegenden Anschlussfahnen aufgelegt und fest an diese angepresst. Die Klemmplatte kann dabei aus einem elektrisch leitfähigen Material bestehen oder eine den Anschlussfahnen zugewandte, elektrisch leitfähige Schicht aufweisen. Sie trägt dann dazu bei, einen möglicht großen Verbindungsquerschnitt zwischen den Batteriekontakten herzustellen. Damit eine derartige elektrische Verbindung dauerhaft ist, weist die Montageplatte eine Befestigungsvorrichtung auf, die zum Befestigen der Klemmplatte und der Anschlussfahnen vorgesehen ist, beispielsweise kann die Klemmplatte mittels einer oder mehrerer Schrauben in Kontakt mit den Anschlussfahnen an der Montageplatte befestigt werden.

In einer Ausführungsform ist vorgesehen, dass die Durchführungen der Montageplatte für die Anschlussfahnen schlitzförmig sind. Es versteht sich, dass die Durchführungen auch einen anderen Querschnitt aufweisen können, wobei bevorzugt der Querschnitt der Durchführungen an den Querschnitt der Anschlussfahnen angepasst ist. Runde Durchführungen sind somit nicht ausgeschlossen und gelten als bevorzugte Ausführungsform, wenn die Anschlussfahnen als Drähte ausgebildet sind, deren Querschnitt kreisförmig ist.

Die Vertiefung der Montageplatte kann auch zur Aufnahme von mehreren, d.h. von mindestens zwei Klemmplatten und vier Anschlussfahnen vorgesehen sein. Dies ist besonders dann zweckmäßig, wenn die Anschlussfahnen zweier benachbarter Batteriezellen gemeinsam durch eine Durchführung hindurchgeführt und mit einer oder zwei weiteren Anschlussfahnen eines weiteren Paares von Batteriezellen, die durch die benachbarte Durchführung an derselben Vertiefung hindurchgeführt sind, in Kontakt gebracht werden. Werden diese vier Anschlussfahnen zwischen zwei Klemmplatten fixiert und zusammengepresst, besteht das Anschlusspaket aus zwei Klemmplatten und vier aufeinanderliegenden Anschlussfahnen, und die Vertiefung sollte dieses Paket möglichst ohne Überstand aufnehmen können, damit die elektrische Verbindung vor mechanischen Einwirkungen geschützt ist. Die Oberfläche der Montageeinrichtung ist demnach frei von hervorstehenden Bauteilen, was insbesondere für das Stapeln mehrerer Batteriemodule übereinander von Vorteil ist.

In einer weiteren Ausführungsform ist die Vertiefung nicht nur zur Aufnahme von mindestens zwei Klemmplatten und zwei Anschlussfahnen vorgesehen, sondern nimmt zusätzlich auch die Befestigungsvorrichtung (zum Beispiel eine Schraube bzw. den Schraubenkopf) ohne Überstand über die Oberfläche der Montageplatte auf.

Um die elektrischen Anschlussfahnen weitestgehend vor einer Beschädigung zu schützen, ist es vorgesehen, dass die Durchführungen zumindest an der Unterseite der Montageplatte und vorzugsweise auch am Übergang zur Oberseite bzw. einer an der Oberseite vorgesehenen Vertiefung eine Fase aufweisen. Scharfe Kanten oder Knickstellen werden so vermieden.

In einer Ausführungsform weist die Befestigungseinrichtung eine Bohrung, ein Befestigungsmittel wie zum Beispiel eine Schraube und eine entsprechende Gewindehülse auf, wobei die Bohrung durch die Montageplatte geführt und derart ausgestaltet ist, dass auf der Unterseite der Montageplatte die Bohrung für die Aufnahme einer Gewindehülse vorgesehen ist, so dass ein Befestigungsmittel, beispielsweise eine Schraube, von der Oberseite der Montageplatte durch die Bohrung geführt und mit der Gewindehülse in Eingriff treten kann. Sowohl die Klemmplatte als auch die Anschlussfahnen können mit Hilfe des Befestigungsmittels zusammengepresst und an der Montageplatte befestigt werden. Auch eine federnd vorgespannte Klemmplatte oder eine mehrere Verbindungen gleichzeitig klemmende Platte oder sonstige Klemmeinrichtung, die selbstverständlich keine durchgehend leitfähige Schicht in Kontakt mit den Anschlussfahnen aufweisen darf, könnte auf der Montageplatte vorgesehen sein. Eine lösbare dauerhafte elektrische Verbindung zwischen den Anschlussfahnen wird auf diese Weise gewährleistet.

Alternative oder zusätzliche Befestigungsmittel, wie beispielsweise Klammern, Nieten oder Pressverbindungen sind dabei nicht ausgeschlossen.

Um die mechanische Stabilität des Batteriemoduls sowie eine gleichmäßige Kraftverteilung auf die einzelnen Batteriezellen zu gewährleisten, ist in einer Ausführungsform vorgesehen, dass die Unterseite der Montageplatte komplementär zu der Oberfläche der Batteriezellen ausgeformt ist und zumindest abschnittsweise einen Verbund aus Batteriezellen aufnehmen kann.

Mit anderen Worten kann die Montageplatte auch auf der Unterseite Vertiefungen aufweisen, die zur zumindest abschnittsweisen Aufnahme der Oberseite einzelner Batteriezellen ausgestaltet sind und diese zumindest gegen seitliche Relativverschiebungen fixieren. Es kann somit sicherer verhindert werden, dass sich einzelne Batteriezellen aus dem Verbund von Batteriezellen lösen, oder dass sich die Montageplatte von den Batteriezellen löst. Außerdem wird die elektrische Verbindung durch diese Fixierung der Batteriezellen mechanisch entlastet.

Die Klemmplatten können aus einem elektrisch leitfähigen Metall, vorzugsweise aus Aluminium, hergestellt sein. Es versteht sich, dass die Klemmplatten und die Anschlussfahnen auch aus einem anderen, leitenden und metallurgisch zum Anoden- und Kathodenträgermaterial korrespondierenden Material hergestellt sein können, wobei bevorzugt korrosionsbeständige Metalle und deren Verbindungen verwendet werden.

In einer Ausführungsform ist die Montageplatte aus Kunststoff, vorzugsweise aus Polystyrol, hergestellt. Insbesondere sind solche Kunststoffmaterialien bevorzugt, die sich leicht extrudieren und umformen lassen. Eine Montageplatte aus solchen Kunststoffen ist leicht und preiswert herstellbar und kann gut mechanisch nachbearbeitet werden. Insbesondere die Durchführungen, Ausnehmungen und Bohrungen können somit individuell an die Gegebenheiten einzelner Batteriezellen bzw. des Batteriemoduls angepasst werden.

Die Durchführungen sind in einer Ausführungsform derart in der Montageplatte angeordnet, dass die einzelnen Batteriezellen wahlweise oder nach einem vorgegebenen Schema in Reihen-und/oder Parallelschaltung elektrisch miteinander verbunden werden können.

Eine Montageeinrichtung mit den oben genannten Merkmalen kann insbesondere zum Anschluss mehrerer benachbarter Batteriezellen verwendet werden, wobei die Anschlussfahnen zweier benachbarter Batteriezellen durch je eine Durchführung hindurchgeführt werden, aufeinander zu umgebogen werden und zwischen zwei Klemmplatten oder zwischen einer Klemmplatte und der Oberseite der Montageplatte bzw. dem Grund einer Vertiefung in der Oberseite der Montageplatte in elektrischen Kontakt miteinander gebracht werden, wobei die Klemmplatte(n) und die Anschlussfahnen mit Hilfe der Befestigungsvorrichtung fixiert werden und wobei die Klemmplatte(n), die Anschlussfahnen sowie optional auch mindestens eine Teil der Befestigungsvorrichtung in einer Vertiefung der Montageplatte aufgenommen sind.

Denkbar ist auch, dass die Anschlussfahnen zumindest zweier benachbarter Batteriezellen gemeinsam durch eine Durchführung hindurchgeführt werden und in einer Vertiefung in der Oberseite der Montageplatte miteinander sowie mit einem weiteren Paar elektrischer Anschlussfahnen zweier weiterer, benachbarter Batteriezellen in Kontakt gebracht werden. Zusätzlich können die Anschlussfahnen mit einer Klemmplatte abgedeckt werden, um so zum Einen den elektrischen Kontakt zu verbessern und zum Anderen mit Hilfe der Befestigungsvorrichtung die Klemmplatte sowie die Anschlussfahnen auf die Montageplatte zu pressen und mechanisch zu sichern.

Weitere Vorteile, Merkmale und Anwendungsmöglichkeiten der vorliegenden Erfindung werden deutlich anhand der vorliegende Beschreibung von bevorzugten Ausführungsformen und den dazu gehörigen Figuren. Es zeigen:
- Figur 1: eine Draufsicht auf eine Ausführungsform einer Montageeinrichtung sowie einen schematischen Stufenschnitt gemäß der Schnittlinie B-B;
- Figur 2: eine Draufsicht auf die Unterseite einer Ausführungsform gemäß Figur 1;
- Figur 3: eine perspektivische Ansicht auf die Montageeinrichtung gemäß Figur 1;
- Figur 4: eine schematische Schnittansicht durch eine Ausführungsform der vorliegenden Erfindung;
- Figur 5: eine schematische Schnittansicht einer Ausführungsform mit vier Batteriezellen;
- Figur 6: eine schematische Schnittansicht durch eine weitere Ausführungsform einer Montageeinrichtung.

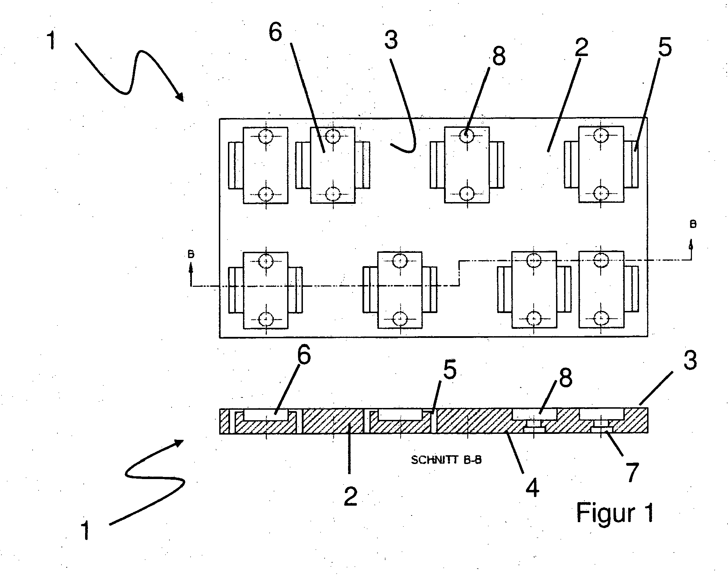

In Figur 1 dargestellt ist eine schematische Draufsicht auf die Oberseite einer Ausführungsform einer Montageeinrichtung sowie ein schematischer Stufenschnitt entlang der Linie B-B. Die Montageeinrichtung 1 zum elektrischen Anschließen von Batteriezellen 12 weist eine Montageplatte 2 mit einer Ober- und einer Unterseite 3, 4 auf, wobei die Montageplatte 2 aus einem elektrisch nicht leitfähigen Material, wie zum Beispiel Polystyrol, hergestellt ist.

Von der Unterseite 4 her durchgehend bis zur Oberseite 3 der Montageplatte 2 sind Durchführungen 5 vorgesehen, welche derart ausgestaltet sind, dass zumindest eine Anschlussfahne 10 (hier nicht gezeigt) einer Batteriezelle von der Unterseite 4 her durch die Durchführung 5 hin durchgeführt werden kann. Dabei sind die Durchführungen 5 derart in der Montageplatte 2 angeordnet, dass die nach oben aus den Durchführungen 5 herausragenden Anschlussfahnen 10 zumindest zweier benachbarter Batteriezellen 12 auf der Oberseite 3 der Montageplatte 2 in elektrischen Kontakt miteinander gebracht werden können, und zwar vorzugsweise durch in etwa rechtwinkliges Umbiegen und Übereinanderlegen.

Weiterhin weist die Montageplatte 2 auf der Oberseite 3 eine Vertiefung 6 zur zumindest abschnittsweisen Aufnahme einer Klemmplatte 11 auf, wobei die Klemmplatte 11 aus einem elektrisch leitfähigen Material, wie zum Beispiel Aluminium, hergestellt ist.

Darüber hinaus ist an der Montageplatte 2 eine Befestigungsvorrichtung zum Befestigen der Klemmplatte 11 und der Anschlussfahnen 10 vorgesehen. Die Befestigungsvorrichtung umfasst eine Bohrung 8, eine Schraube als Befestigungsmittel 9 sowie eine Gewindehülse 7. Die Bohrung 8 ist durch die Montageplatte 2 geführt und am unteren Ende aufgeweitet, so dass die Bohrung 8 auf der Unterseite 4 der Montageplatte 2 eine Gewindehülse 7 bündig aufnehmen kann, so dass eine Schraube 9 von der Oberseite 3 der Montageplatte 2 durch die Bohrung 8 hindurchgeführt werden und mit der Gewindehülse 7 in Eingriff treten kann. Die obere Aussparung 6 ist hinreichend tief, so dass sie die übereinandergelegten Anschlussfahnen 10, die Klemmplatte 11 und den auf der Klemmplatte 11 aufsitzenden Schraubenkopf aufnehmen kann, so das keinerlei Teile der Befestigungseinrichtung oder der Anschlussfahnen 10 über die Oberseite 3 der Montageplatte 2 hervorstehen.

Die Anordnung der hier schlitzförmigen Durchführungen 5 ist so gewählt, dass die einzelnen Batteriezellen 12, die mindestens teilweise unter der Montageplatte 2 angeordnet sind, in Reihenschaltung elektrisch miteinander verbunden werden können.

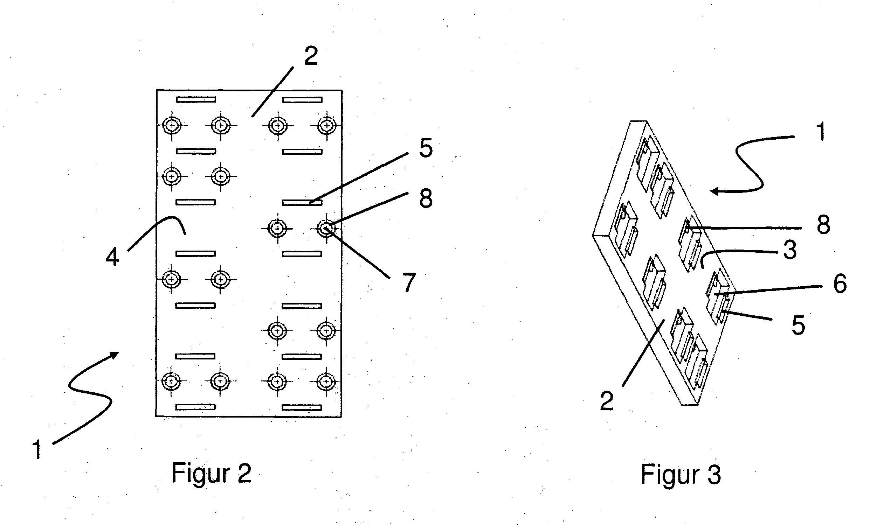

In Figur 2 ist eine schematische Draufsicht auf die Unterseite 4 der Montageplatte 2 als Bestandteil einer Montageeinrichtung 1 dargestellt. Entsprechend den Ausführungsformen gemäß Figur 1, weist die Montageplatte 2 schlitzförmige Durchführungen 5 auf, die zur Durchführung von Anschlussfahnen 10 vorgesehen sind. Darüber hinaus weist die Montageplatte 2 Bohrungen 8 auf, die von der Unterseite 4 mit bündig aufgenommenen Gewindehülsen 7 bestückt sind. Mit den Gewindehülsen 7 können Befestigungsmittel 9, beispielsweise Schrauben, in Eingriff gebracht werden.

Figur 3 zeigt die Montageeinrichtung 1 der vorangegangenen Figuren in einer perspektivischen Ansicht. Die Vertiefung 6 zur (zumindest abschnittsweisen) Aufnahme einer Klemmplatte 11 ist gut erkennbar auf der Oberseite 3 der Montageplatte 2 angeordnet. Die Bohrungen 8 der Befestigungsvorrichtung erstrecken sich vom Grund der Vertiefung 6 bis zur Unterseite 4 der Montageplatte 2.

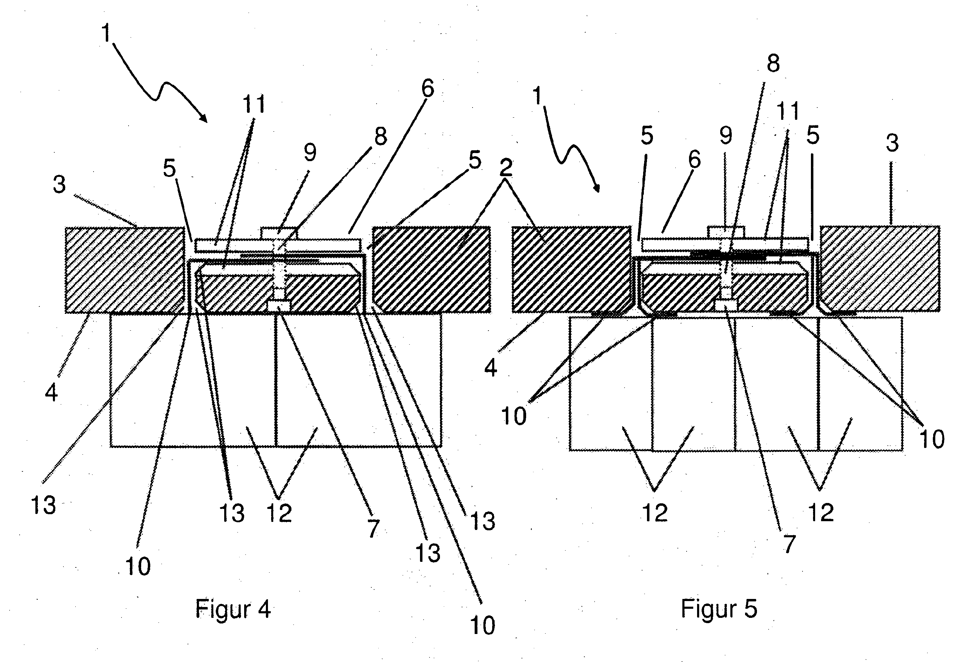

In Figur 4 ist eine seitliche Schnittansicht durch eine erfindungsgemäße Ausführungsform der vorliegenden Montageeinrichtung 1 zum elektrischen Anschließen von Batteriezellen 12 dargestellt. Die Montageplatte 2 hat eine Ober- und eine Unterseite 3, 4, wobei die Montageplatte 2 aus einem elektrisch nicht leitfähigen Material hergestellt ist. Die Montageplatte 2 weist Durchführungen 5 auf, durch die die Anschlussfahnen 10 zweier benachbarter Batteriezellen 12 von der Unterseite 4 her in die Vertiefung 6 der Oberseite 3 hindurchgeführt werden können. Die Anschlussfahnen 10 werden so übereinander gelegt und zwischen zwei Klemmplatten 11 angeordnet, dass sie in elektrischem Kontakt miteinander stehen. Sind die Klemmplatten 11 aus einem elektrisch leitfähigen Material hergestellt, wird der elektrische Widerstand der Verbindung insgesamt reduziert. Die Klemmplatten 11 und die Anschlussfahnen 10 sind derart von der Vertiefung 6 der Montageplatte 2 aufgenommen, dass sie weitestgehend vor äußeren mechanischen Einflüssen geschützt sind. Damit die Anschlussfahnen 10 nicht über scharfe Kanten geführt werden müssen, weist sowohl die Montageplatte 2 als auch die untere Klemmplatte 11 eine Fase auf. Die untere Klemmplatte 11 könnte auch entfallen oder alternativ aus einer elektrisch leitfähigen Beschichtung des Grundes der Aussparung bzw. Vertiefung 6 bestehen.

Zur Befestigung der elektrischen Verbindung ist in der Montageplatte 2 eine Bohrung 8 vorgesehen, die auf der Unterseite 4 für die Aufnahme einer Gewindehülse 7 aufgeweitet ist. In die Bohrung 8 kann ein Befestigungsmittel 9 eingeführt werden, welches mit der Gewindehülse 7 derart in Eingriff bringbar ist, dass die Klemmplatten 11 und die dazwischen liegenden Anschlussfahnen 10 zusammengepresst und fixiert werden.

Damit die Montageeinrichtung 1 eine ebene Oberfläche aufweist, ist die Vertiefung 6 der Montageplatte 2 ausreichend tief ausgebildet, so dass auch das Befestigungsmittel 9 von dieser vollständig aufgenommen werden kann. Dies hat den Vorteil, dass auch die Befestigungsvorrichtung vor äußeren mechanischen Einflüssen weitestgehend geschützt ist.

Eine weitere Ausführungsform der vorliegenden Erfindung ist in Figur 5 dargestellt. Die schematische Schnittansicht zeigt eine Montageeinrichtung 1, bei der die Durchführungen 5 derart angeordnet sind, dass die Anschlussfahnen 10 von vier benachbarten Batteriezellen 12 zwischen zwei Klemmplatten 11 eingeklemmt werden können. Sowohl die Klemmplatten 11 als auch die dazwischen liegenden Anschlussfahnen 10 und die Befestigungsvorrichtung werden vollständig von einer Vertiefung 6 aufgenommen. Es versteht sich, dass die Anschlussfahnen 10 der Batteriezellen 12 zwischen den Klemmplatten 11 in elektrischem Kontakt miteinander stehen, wobei auch die Klemmplatten 11 selbst aus einem elektrisch leitfähigen Material hergestellt sind. Je nachdem welche der je zwei Anschlussfahnen 10 einer Batteriezellemiteinander verbunden sind, sind entweder gleiche oder verschiedene Pole der Batteriezellen zwischen zwei Klemmplatten 11 miteinander verbunden, was entweder eine Parallel- oder eine Reihenschaltung bedeutet, wobei allerdings bei der Version gemäß Figur 5 mindestens die beiden linken und die beiden rechten Batteriezellen jeweils parallel zueinander geschaltet sind, also zwei gleiche Pole dieser Zellen miteinander verbunden sind, wobei aber die beiden Zweiergruppen von Zellen wahlweise parallel oder in Reihe geschaltet sein können.

Zur Reduzierung der mechanischen Belastung weisen die Durchführungen 5 an der der Unterseite 4 und auch an der Oberseite 3 bzw. dem Übergang zur Vertiefung der Montageplatte 2 oder der unteren Klemmplatte 11 Fasen auf, die verhindern, dass die Anschlussfahnen 10 über scharfe Kanten geführt und dadurch beschädigt werden.

Es versteht sich, dass die Durchführungen 5 derart in der Montageplatte 2 angeordnet sind, dass je nach der geometrischen Ausgestaltung bzw. Anordnung der Batteriezellen 12 eine elektrische Verbindung der Batteriezellen 12 untereinander wahlweise durch Reihen- oder durch Parallelschaltung möglich ist, wobei auch gruppenweise Parallel- und Reichenschaltungen realisierbar sind, so dass beispielsweise je zwei oder vier Zellen parallel geschaltet sind und eine entsprechende Anzahl derartiger Vierergruppen in Reihe geschaltet ist, um einen gewünschten Wert einer Gesamtspannung bereitzustellen.

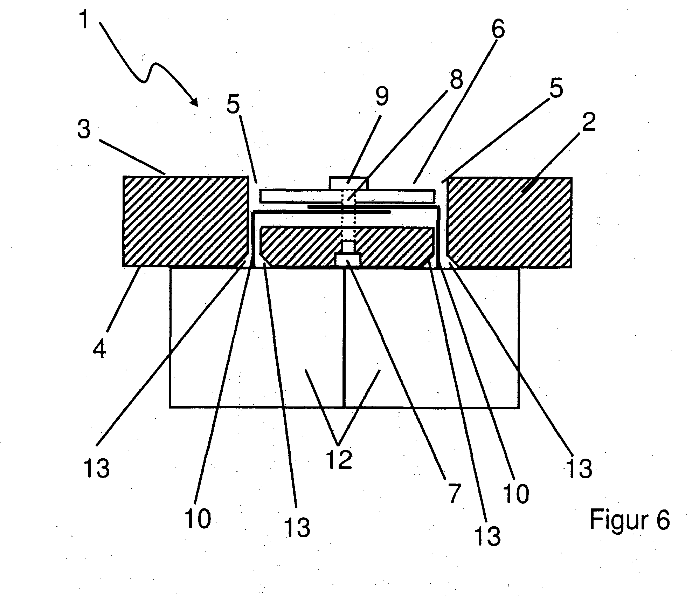

In Figur 6 ist eine Ausführungsform dargestellt, bei der die Anschlussfahnen 10 der Batteriezellen 12 in einer Vertiefung 6 der Montageplatte 2 angeordnet sind, wobei die Anschlussfahnen 10 ohne eine untere Klemmplatte 11 in elektrischem Kontakt miteinander stehen. Zur Fixierung der Anschlussfahnen 10 und der Verbesserung des elektrischen Kontaktes wegen ist nur eine obere Klemmplatte 11 derart in der Vertiefung 6 und über den Anschlussfahnen 10 angeordnet, dass die Anschlussfahnen 10 mit Hilfe der Klemmplatte 11 und einer Befestigungsvorrichtung (Schrauben) auf den Boden der Vertiefung 6 gepresst werden.

Die Befestigungsvorrichtung weist auch hier eine Bohrung 8 auf, in die von der Unterseite 4 der Montageplatte 2 eine Gewindehülse 7 eingebracht ist, so dass eine Schraube 9 von der Oberseite 3 der Montageplatte 2 in die Bohrung 8 eingeführt und mit der Gewindehülse 7 lösbar verbunden werden kann.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

### Bezugszeichenliste

- 1: Montageeinrichtung
- 2: Montageplatte
- 3: Oberseite
- 4: Unterseite
- 5: Durchführung
- 6: Vertiefung
- 7: Gewindehülse
- 8: Bohrung
- 9: Befestigungsmittel
- 10: Anschlussfahne
- 11: Klemmplatte
- 12: Batteriezellen
- 13: Fase

## Patentansprüche

1. Montageeinrichtung (1) zum elektrischen Anschließen von Batteriezellen (12), wobei eine Montageplatte (2) mit einer Ober- und einer Unterseite (3, 4) vorgesehen ist, welche aus einem elektrisch nicht leitfähigem Material hergestellt ist, wobei die Montageplatte (2) so bemessen ist, dass sie die Anschlussbereiche mindestens zweier benachbarter Zellen abdeckt und wobei in der Montageplatte (2) mindestens zwei Durchführungen (5) vorgesehen sind, welche derart ausgestattet und angeordnet sind, dass zumindest eine Anschlussfahne (10) einer Batteriezelle (12) durch eine Durchführung (5) hindurchgeführt werden kann, so dass die hindurchgeführten Anschlussfahnen (10) zumindest zweier benachbarter Batteriezellen (12) auf der Oberseite (3) der Montageplatte (2) elektrisch und mechanisch verbindbar sind, **dadurch gekennzeichnet, dass** die Oberseite (3) der Montageplatte (2) eine Vertiefung (6) aufweist, die zur Aufnahme von mindestens zwei Klemmplatten (11) und zwei Anschlussfahnen (10) vorgesehen ist.

2. Moritageeinriehtung (1) zum elektrischen Anschließen von Batteriezellen (12) nach Anspruch 1, **dadurch gekennzeichnet, dass** die Klemmplatte (11) aus einem elektrisch leitfähigen Material hergestellt ist und wobei an der Montageplatte (2) eine Befestigurigsvorrichtung zum Befestigen der Klemmplatte (11) und der Anschlussfahnen (10) vorgesehen ist.

3. Montageeinrichtung (1) nach Anspruch 1 oder 2, **dadurch gekennzeichnet, dass** die Durchführungen (5) für die Anschlussfahnen (10) schlitzförmig sind.

4. Montageeinrichtung (1) nach einem der Ansprüche 1 bis 3, **dadurch gekennzeichnet, dass** die Vertiefung (6) zur bündigen Aufnahme von mindestens zwei Klemmplatten (11), zwei Anschlussfahnen (10) und der Befestigungsvorrichtung vorgesehen ist.

5. Montageeinrichtung (1) nach einem der Ansprüche 1 bis 4, **dadurch gekennzeichnet, dass** die Durchführungen (5) zumindest an der Unterseite (4) der Montageplatte (2) eine Fase (13) aufweisen.

6. Montageeinrichtung (1) nach einem der Ansprüche 1 bis 5, **dadurch gekennzeichnet, dass** die Befestigungseinrichtung eine Bohrung (8), eine Schraube (9) und eine Gewindehülse (7) umfasst, wobei die Bohrung (8) Ober- und Unterseite (3, 4) verbindet und durch die Montageplatte (2) hindurch verläuft und auf der Unterseite (4) der Montageplatte (2) die Bohrung (8) zur Aufnahme einer Gewindehülse (7) vorgesehen ist, so dass eine Schraube (9) von der Oberseite (3) der Montageplatte (2) durch die Bohrung (8) geführt werden und mit der Gewindehülse (7) in Eingriff treten kann.

7. Montageeinrichtung (1) nach einem der Ansprüche 1 bis 6, **dadurch gekennzeichnet, dass** die Unterseite (4) der Montageplatte (2) komplementär zur der Oberfläche der Batteriezellen (12) ausgeformt ist und zumindest abschnittsweise einen Verbund aus Batteriezellen (12) aufnehmen kann.

8. Montageeinrichtung (1) nach einem der Ansprüche 1 bis 7, **dadurch gekennzeichnet, dass** die Klemmplatten (11) aus einem elektrisch leitfähigen Metall, vorzugsweise Aluminium, hergestellt sind.

9. Montageeinrichtung (1) nach einem der Ansprüche 1 bis 8, **dadurch gekennzeichnet, dass** die Montageplatte (2) aus Kunststoff, vorzugsweise aus Polystyrol, hergestellt ist.

10. Montageeinrichtung (1) nach einem der Ansprüche 1 bis 9, **dadurch gekennzeichnet, dass** die Durchführungen (5) derart in der Montageplatte (2) angeordnet sind, dass die einzelnen Batteriezellen (12) wahlweise in Reihen- und/oder Parallelschaltung elektrisch miteinander verbindbar sind.

11. Montageeinrichtung (1) nach einem der Ansprüche 1 bis 10, **dadurch gekennzeichnet, dass** die Montageplatte mindestens zwei Vertiefungen (6) zur Aufnahme von Anschlussfahnen (10) und Klemmplatten (11) sowie mindestens je 2 Durchführungen für Anschlussfahnen (10) im Bereich jeder der Vertiefungen (6) aufweist.

12. Verwendung einer Montageeinrichtung (1) nach einem der Ansprüche 1 bis 11, **dadurch gekennzeichnet, dass** Anschlussfahnen (10) zumindest zweier benachbarter Batteriezellen (12) durch die Durchführungen (5) hindurch geführt werden und zwischen den mindestens zwei Klemmplatten (11) und der Oberseite (3) der Montageplatte (2) oder dem Grund einer Vertiefung (6) darin in elektrischen Kontakt miteinander gebracht werden, wobei die Klemmplatten (11) und die Anschlussfahnen (10) mit Hilfe der Befestigungsvorrichtung befestigt werden

13. Verwendung einer Montageeinrichtung (1) nach Anspruch 12, **dadurch gekennzeichnet, dass** die mindestens zwei Klemmplatten (11), die übereinander gelegten Anschlussfahnen (10) sowie die Befestigungsvorrichtung von einer Vertiefung (6) der Montageplatte (2) aufgenommen sind.

14. Verwendung einer Montageeinrichtung (1) nach Anspruch 13, **dadurch gekennzeichnet, dass** vor dem Übereinanderlegen der Anschlussfahnen (10) auch unterhalb der Anschlussfahnen (10) eine vorzugsweise elektrisch leitfähige Klemmplatte (11) angeordnet wird.

## Claims

1. Assembly device (1) for electrically connecting battery cells (12), wherein an assembly plate (2) having a top and a bottom side (3, 4) is provided, which is made of an electrically non-conductive material, wherein the assembly plate (2) is designed such that it covers the connection areas of at least two neighboring cells and wherein at least two through holes (5) are provided in the assembly plate (2), which are designed and arranged in such a way that at least a terminal lug (10) of a battery cell (12) can be passed through a through hole (5), such that the terminal lugs (10) of at least two neighboring battery cells (12) which have been passed through can be electrically and mechanically connected, **characterized in that** the top side (3) of the assembly plate (2) comprises a recess (6), which is intended for receiving at least two clamping plates (11) and two terminal lugs (10).

2. Assembly device (1) for electrically connecting battery cells (12) according to claim 1, **characterized in that** the clamping plate (11) is made of an electrically conductive material and wherein a mounting device for mounting the clamping plate (11) and the terminal lugs (10) is provided on the assembly plate (2).

3. Assembly device (1) according to claims 1 or 2, **characterized in that** the through holes (5) for the terminal lugs (10) are slot-shaped.

4. Assembly device (1) according to one of claims 1 to 3, **characterized in that** the recess (6) is intended for flush mounting of at least two clamping plates (11), two terminal lugs (10) and the mounting device.

5. Assembly device (1) according to one of claims 1 to 4, **characterized in that** at least at the bottom side (4) of the assembly plate (2) the through holes (5) comprise a chamfer (13).

6. Assembly device (1) according to one of claims 1 to 5, **characterized in that** the mounting device comprises a bore (8), a screw (9) and a threaded sleeve (7), wherein the bore (8) connects the top and bottom side (3, 4) and passes through the assembly plate (2) and on the bottom side (4) of the assembly plate (2) the bore (8) is intended for receiving a threaded sleeve (7), such that from the top side (3) of the assembly plate (2) a screw (9) can be passed through the bore (8) and can engage with the threaded sleeve (7).

7. Assembly device (1) according to one of claims 1 to 6, **characterized in that** the bottom side (4) of the assembly plate (2) is designed complementary to the surface of the battery cells (12) and can at least sectionwise receive a group of battery cells (12).

8. Assembly device (1) according to one of claims 1 to 7, **characterized in that** the clamping plates (11) are made of an electrically conductive metal, preferably aluminium.

9. Assembly device (1) according to one of claims 1 to 8, **characterized in that** the assembly plate (2) is made of plastic, preferably of polystyrene.

10. Assembly device (1) according to one of claims 1 to 9, **characterized in that** the through holes (5) are mounted in such a way in the assembly plate (2) that the individual battery cells (12) can either be electrically connected to each other in series and/or in parallel.

11. Assembly device (1) according to one of claims 1 to 10, **characterized in that** the assembly plate comprises at least two recesses (6) for receiving terminal lugs (10) and clamping plates (11) as well as at least 2 through holes each for terminal lugs (10) in the section of each of the recesses (6).

12. Use of an assembly device (1) according to one of claims 1 to 11, **characterized in that** the terminal lugs (10) of at least two neighboring battery cells (12) are passed through the through holes (5) and are electrically connected to each other between the at least two clamping plates (11) and the top side (3) of the assembly plate (2) or the bottom of a recess (6), wherein the clamping plates (11) and the terminal lugs (10) are mounted by means of the mounting device.

13. Use of an assembly device (1) according to claim 12, **characterized in that** the at least two clamping plates (11), the terminal lugs (10) put on top of each other as well as the mounting device are received by a recess (6) of the assembly plate (2).

14. Use of an assembly device (1) according to claim 13, **characterized in that** before putting the terminal lugs (10) on top of each other a preferably electrically conductive clamping plate (11) is arranged below the terminal lugs (10), too.

## Revendications

1. Dispositif de montage (1) pour la connexion électrique d'éléments de batterie (12), dans lequel il est prévu une plaque de montage (2) qui présente un côté supérieur et un côté inférieur (3, 4) et qui est fabriquée dans un matériau électriquement non conducteur, dans lequel la plaque de montage (2) est dimensionnée de telle sorte qu'elle couvre les zones de connexion d'au moins deux éléments voisins, et dans lequel il est prévu dans la plaque de montage (2) au moins deux traversées (5) qui sont constituées et disposées de façon telle qu'au moins une barrette de connexion (10) d'un élément de batterie (12) peut être enfilée à travers une traversée (5), de sorte que les barrettes de connexion (10) d'au moins deux éléments de batterie voisins (12) qui sont ainsi enfilées peuvent être connectées électriquement et mécaniquement sur le côté supérieur (3) de la plaque de montage, **caractérisé en ce que** le côté supérieur (3) de la plaque de montage (2) présente un évidement qui est prévu pour recevoir au moins deux plaques de serrage (11) et deux barrettes de connexion (10).

2. Dispositif de montage (1) pour la connexion électrique d'éléments de batterie (12) selon la revendication 1, **caractérisé en ce que** la plaque de serrage (11) est fabriquée à partir d'un matériau électriquement conducteur et **en ce qu'**est prévu sur la plaque de montage (2) un dispositif de fixation servant à fixer la plaque de serrage (11) et les barrettes de connexion (10).

3. Dispositif de montage (1) selon la revendication 1 ou 2, **caractérisé en ce que** les traversées (5) destinées aux barrettes de connexion (10) sont en forme de fente.

4. Dispositif de montage (1) selon l'une des revendications 1 à 3, **caractérisé en ce que** l'évidement (6) est prévu pour recevoir de façon jointive au moins deux plaques de serrage (11), deux barrettes de connexion (10) et le dispositif de fixation.

5. Dispositif de montage (1) selon l'une des revendications 1 à 4, **caractérisé en ce que** les traversées (5) présentent un chanfrein (13) au moins au niveau du côté inférieur de la plaque de montage (2).

6. Dispositif de montage (1) selon l'une des revendications 1 à 5, **caractérisé en ce que** le dispositif de fixation comprend un perçage (8), une vis (9) et une douille filetée (7), le perçage (8) reliant le côté supérieur et le côté inférieur (3, 4) et s'étendant à travers la plaque de montage (2), et le perçage (8) étant prévu sur le côté inférieur (4) de la plaque de montage (2) pour recevoir une douille filetée (7), de sorte qu'une vis (9) peut être enfilée à travers le perçage (8) depuis le côté supérieur de la plaque de montage (2) et peut entrer en prise avec la douille filetée (7).

7. Dispositif de montage (1) selon l'une des revendications 1 à 6, **caractérisé en ce que** le côté inférieur (4) de la plaque de montage (2) est d'une forme complémentaire de celle de la surface des éléments de batterie (12) et peut recevoir au moins par segments un ensemble d'éléments de batterie (12).

8. Dispositif de montage (1) selon l'une des revendications 1 à 7, **caractérisé en ce que** les plaques de serrage (11) sont fabriquées à partir d'un métal électriquement conducteur, de préférence l'aluminium.

9. Dispositif de montage (1) selon l'une des revendications 1 à 8, **caractérisé en ce que** la plaque de montage (2) est fabriquée en matière plastique, de préférence en polystyrène.

10. Dispositif de montage (1) selon l'une des revendications 1 à 9, **caractérisé en ce que** les traversées (5) sont disposées dans la plaque de montage (2) de manière telle que les différents éléments (12) de la batterie peuvent être connectés électriquement les uns aux autres en série et/ou en parallèle.

11. Dispositif de montage (1) selon l'une des revendications 1 à 10, **caractérisé en ce que** la plaque de montage présente au moins deux évidements (6) destinés à recevoir des barrettes de connexion (10) et des plaques de serrage (11), ainsi qu'au moins respectivement deux traversées pour barrettes de connexion (10) dans la région de chacun des évidements (6).

12. Utilisation d'un dispositif de montage (1) selon l'une des revendications 1 à 11, **caractérisée en ce que** l'on enfile des barrettes de connexion (10) d'au moins deux éléments de batterie voisins à travers les traversées (5) et qu'on les met en contact électrique les uns avec les autres entre les plaques de serrage (11), au moins au nombre de deux, et le côté supérieur (3) de la plaque de montage (2) ou le fond d'un évidement (6) de cette dernière, les plaques de serrage (11) et les barrettes de connexion (10) étant fixées à l'aide du dispositif de fixation.

13. Utilisation d'un dispositif de montage (1) selon la revendication 12, **caractérisée en ce que** les plaques de serrage (11), au moins au nombre de deux, les barrettes de connexion (10) disposées l'une au-dessus de l'autre ainsi que le dispositif de fixation sont logés dans un évidement (6) de la plaque de montage (2).

14. Utilisation d'un dispositif de montage (1) selon la revendication 13, **caractérisée en ce qu'**avant de disposer les barrettes de connexion (10) l'une au-dessus de l'autre, on dispose aussi une plaque de serrage (11), de préférence électriquement conductrice, au-dessous des barrettes de connexion (10).
